# EUROPEAN PATENT APPLICATION

(11) **EP 4 753 222 A1**
(43) Date of publication of application: **03.06.2026**
(21) Application number: 25205175.0
(22) Date of filing: 29.09.2025
(51) Int. Cl.: H04L 41/0816, H04L 41/0895, H04L 41/342, H04L 41/40, H04W 24/02, H04W 36/08

(54) **OPTIMIZING ADAPTIVE ONLINE NETWORK SLICING**

(30) Priority: 27.11.2024 FI 20246393
(71) Applicant: Nokia Solutions and Networks Oy, 02610 Espoo (FI)
(72) Inventor: KAK, Ahan, Summit (US); CHOI, NAKJUNG, Florham Park (US); ZHAO, Ming, Lincoln (US)
(74) Representative: Bryers Intellectual Property Ltd

(57) **Abstract**

Method comprising
deriving first actions to adapt an allocation of resources of a first slice of a base station to fulfill a first performance requirement independently from an allocation of the resources of a second slice of the base station;
providing information about the first actions;
deriving a set of second actions to adapt the allocation of the resources of the second slice to fulfill a second performance requirement independently from the allocation of the resources of the first slice;
providing information about the second actions;
jointly optimizing the allocation of the resources of the first slice and the second slice based on the information about the first actions, the allocation of the resources of the first slice, the information about the second actions, and the allocation of the resources of the second slice to derive modified first actions and modified second actions;
instructing the base station to apply the modified first actions and modified second actions.

## Description

### Technical Field

The present disclosure relates to adaptive online network slicing.

### Abbreviations

- 3GPP: 3^{rd} Generation Partnership Project
- 5G/6G: 5^{th} Generation/6^{th} Generation
- ADMM: Alternating Direction Method of Multipliers
- Al: Artificial Intelligence
- AONS: Adaptative Online Network Slicing
- BO: Bayesian Optimization
- CSP: Communications Service Provider
- CU-CP: Central Unit- Control Plane
- CU-UP: Central Unit- User Plane
- DL: Deep Learning
- DNN: Deep Neural Network
- DRL: Deep Reinforcement Learning
- DSL: Domaine-Specific Language
- DU: Distributed Unit
- E2E: End-to-End
- GBO: Global Bayesian Optimization
- gNB: next generation NodeB (Base Station)
- GP: Gaussian Process
- GPR: Gaussian Process Regression
- ML: Machine Learning
- MN: Mobile Network
- MNO: Mobile Network Operator
- Near-RT: Near-real Time
- NG-RAN: Next Generation RAN
- Non-RT: Non-real Time
- NR: New Radio
- O-DU: O-RAN Distributed Unit
- O-RAN: Open RAN
- O-RU: O-RAN Radio Unit
- QoS: Quality of Service
- RAN: Radio Access Network
- RIC: RAN Intelligent Controller
- RL: Reinforcement Learning
- RRM: Radio Resource Management
- RT RIC: Realtime RAN Intelligent Controller
- SLA: Service Level Agreement
- SMO: Service Management and Orchestration

### Background

The O-RAN architecture put forth by the O-RAN Alliance has paved the way for disaggregated radio access networks coupled with a robust softwarized control architecture. While the NG-RAN architecture pioneered the disaggregation of the monolithic gNB into a CU-CP, CU-UP, and DU, O-RAN further disaggregates the DU into two distinct entities- an O-RAN DU (O-DU) and an O-RAN radio unit (O-RU).

Through a set of external network controllers (i.e., the near-real time RAN Intelligent Controller (near-RT RIC) and non-real time RAN Intelligent Controller (non-RT RIC)), O-RAN introduced novel network control functionalities and assurance frameworks that are geared specifically towards the access network. In particular, the near-RT RIC operates on a timescale of > 10 ms and exercises near-real time control of the underlying RAN over the E2 interface through applications called xApps. Key functions of the near-RT RIC include interpretation and enforcement of policies from the non-RT RIC, along with the collection of statistics. On the other hand, as part of the Service Management and Orchestration (SMO) framework, the non-RT RIC oversees the control and optimization of RAN elements on a non-real time, i.e., > 1 s, basis. Such control is enabled through applications called rApps that are responsible for providing policy-based guidance and enrichment information for the near-RT RIC. The SMO (and thus non-RT RIC) leverages the O1 interface to interact with both the RAN and the near-RT RIC. Additionally, the non-RT RIC may use the A1 interface to interact with the near-RT RIC.

### Summary

**It** is an object to improve the prior art.

According to a first aspect, there is provided an apparatus comprising
first means for deriving a set of first actions to adapt a current allocation of resources of a first slice of a base station to fulfill a first performance requirement on the first slice independently from a current allocation of the resources of a second slice of the base station different from the first slice;
first means for providing information about the set of first actions;
second means for deriving a set of second actions to adapt the current allocation of the resources of the second slice of the base station to fulfill a second performance requirement on the second slice independently from the current allocation of the resources of the first slice of the base station;
second means for providing information about the set of second actions;
means for jointly optimizing the allocation of the resources of the first slice and the allocation of the resources of the second slice based on the information about the set of first actions, the current allocation of the resources of the first slice, the information about the set of second actions, and the current allocation of the resources of the second slice to derive a set of modified first actions to adapt the current allocation of the resources of the first slice and a set of modified second actions to adapt the current allocation of the resources of the second slice;
means for instructing the base station to apply the set of modified first actions to the current allocation of the resources of the first slice and to apply the set of modified second actions to the current allocation of the resources of the second slice.

The apparatus may further comprise at least one of
first means for inhibiting the base station to apply the set of first actions to the current allocation of the resources of the first slice; or
second means for inhibiting the base station to apply the set of second actions to the current allocation of the resources of the second slice.

The means for deriving the set of first actions may be configured to derive the set of first actions taking into account at least one of
- constraints of the first slice without taking into account the second slice, or
- slice specific costs of the allocation of the resources of the first slice.

The means for deriving the set of second actions may be configured to derive the set of second actions taking into account at least one of
- constraints of the second slice without taking into account the first slice, or
- slice specific costs of the allocation of the resources of the second slice.

The means for jointly optimizing may be configured to jointly optimize the allocation of the resources of the first slice and the allocation of the resources of the second slice taking into account at least one of a total capacity of the resources of the base station or total costs for an operator of the base station.

The resources of the first slice and the resources of the second slice may be radio resources of the base station.

The first means for deriving may be a first learning agent.

The second means for deriving may be a second learning agent.

The first means for deriving and the second means for deriving may be configured to derive the set of first actions and the set of second actions as a slave of an Alternating Direction Method of Multipliers technique, and the means for jointly optimizing may be configured to derive the set of modified first actions and the set of modified second actions as a master of the Alternating Direction Method of Multipliers technique.

According to a second aspect, there is provided a method comprising
deriving a set of first actions to adapt a current allocation of resources of a first slice of a base station to fulfill a first performance requirement on the first slice independently from a current allocation of the resources of a second slice of the base station different from the first slice;
providing information about the set of first actions;
deriving a set of second actions to adapt the current allocation of the resources of the second slice of the base station to fulfill a second performance requirement on the second slice independently from the current allocation of the resources of the first slice of the base station;
providing information about the set of second actions;
jointly optimizing the allocation of the resources of the first slice and the allocation of the resources of the second slice based on the information about the set of first actions, the current allocation of the resources of the first slice, the information about the set of second actions, and the current allocation of the resources of the second slice to derive a set of modified first actions to adapt the current allocation of the resources of the first slice and a set of modified second actions to adapt the current allocation of the resources of the second slice;
instructing the base station to apply the set of modified first actions to the current allocation of the resources of the first slice and to apply the set of modified second actions to the current allocation of the resources of the second slice.

The method may further comprise at least one of
inhibiting the base station to apply the set of first actions to the current allocation of the resources of the first slice; or
inhibiting the base station to apply the set of second actions to the current allocation of the resources of the second slice.

The set of first actions may be derived taking into account at least one of
- constraints of the first slice without taking into account the second slice, or
- slice specific costs of the allocation of the resources of the first slice.

The set of second actions may be derived taking into account at least one of
- constraints of the second slice without taking into account the first slice, or
- slice specific costs of the allocation of the resources of the second slice.

The allocation of the resources of the first slice and the allocation of the resources of the second slice may be jointly optimized taking into account at least one of a total capacity of the resources of the base station or total costs for an operator of the base station.

The resources of the first slice and the resources of the second slice are radio resources of the base station.

The set of first actions may be derived by a first learning agent.

The set of second actions may be derived by a second learning agent.

The set of first actions and the set of second actions may be derived by a slave of an Alternating Direction Method of Multipliers technique, and the set of modified first actions and the set of modified second actions may be derived by a master of the Alternating Direction Method of Multipliers technique.

The method of the second aspect may be a method of optimizing adaptive network slicing.

According to a third aspect, there is provided a computer program product comprising a set of instructions which, when executed on an apparatus, is configured to cause the apparatus to carry out the method according to the second aspect. The computer program product may be embodied as a computer-readable medium or directly loadable into a computer.

According to some example embodiments, at least one of the following advantages may be achieved:
- Performance may be optimized both in a per-slice level and in a system wide level;
- Solution can cope with strong time variances;
- Solution is scalable;
- Solution may be implemented on top of existing O-RAN implementation.

### Brief description of the drawings

Further details, features, objects, and advantages are apparent from the following detailed description of the preferred example embodiments which is to be taken in conjunction with the appended drawings, wherein:
Fig. 1 shows a AONS system deployed within the O-RAN network according to some example embodiments;
Fig. 2 shows a workflow according to some example embodiments;
Fig. 3 shows a design of a AONS xApp according to some example embodiments;
Fig. 4 shows a design of a AONS rApp according to some example embodiments;
Fig. 5 shows a distributed adaptive online learning algorithm according to some example embodiments;
Fig. 6 shows a pseudocode for the adaptive online learning algorithm according to some example embodiments;
Fig. 7 shows an apparatus according to an example embodiment;
Fig. 8 shows a method according to an example embodiment; and
Fig. 9 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

Several use cases have been proposed for O-RAN, among which is network slicing. Network slicing provides for multiple logical networks, i.e., slices, to be provisioned on a common physical infrastructure, thereby allowing the network to be delivered "as-a-service", wherein each of the provisioned slices may have another service level agreements (SLAs) than the other slices. While network slices traverse all domains of the network- access, transport, core, edge and central clouds, within the context of O-RAN, network slicing primarily refers to RAN slicing. For example, different slices may be used for different types of traffic, such as V2X traffic, loT traffic, enterprise traffic, or fixed-wireless access (FWA) traffic. The significance of network slicing lies in improving network resource utilization efficiency, enabling on-demand customized network services, thereby supporting more innovative applications and business models. To that end, resource management strategies for RAN slicing are considered by communications service providers (CSPs) in their quest to optimize the utilization of radio resources and improve network monetization.

In a similar vein, machine learning (ML)-based radio resource management (RRM) techniques may be adopted to resource efficient slicing. In particular, with a focus on sub-second near-RT operations, the near-RT RIC has emerged as a key asset for the training and deployment of xApp-based ML models for robust slice-aware RRM with several state-of-the-art solutions across industry and academia.

Any resource management solution should take into account the dynamic nature of network slicing. The dynamic nature has several aspects: For example, the traffic within different slices may change rapidly, but also the number of slices in the network, the number of users within a slice, as well as the channel conditions and mobility patterns are all time variant. Therefore, changing slice dynamics are to be considered for resource allocation and SLA satisfaction. Within the context of slice dynamics, a change in the number of slices in the system may be considered at greater detail. Such changes could be triggered both as a result of change in network policy as well as user mobility. For example, the provisioning of a new network service by the network operator might result in the addition of new slices to the network, while deprovisioning would result in the removal of slices. Furthermore, RAN slices are often heterogenous, i.e., each slice may have different latency, throughput, and reliability requirements, for example.

Traditional RRM frameworks often use a unified optimization algorithm for all slices, which cannot well adapt to the dynamics of individual slice users. For instance, if a Bayesian optimization algorithm is used for all slices, its surrogate model represents the overall situation of all slices, resulting in a generalization ability that is too strong, losing the ability to accurately fit individual slices. Moreover, many algorithms adopt offline methods, which have the disadvantage of not being able to respond to network dynamics in real-time. The network environment is time-varying, and the current optimization results may be applicable to the previous network state but may be no longer suitable for the current network situation. This lag may lead to unreasonable resource allocation, affecting network performance and user experience. Additionally, offline methods struggle to handle bursty traffic and emergency situations, lacking the ability to make real-time adjustments.

A hierarchical framework according to some example embodiments may be a more appropriate approach. The hierarchical framework may combine ML and mathematical optimization The advantage of ML in optimization lies in its adaptability and ability to handle complex nonlinear problems, learning from historical data and predicting future trends. The advantage of mathematical optimization lies in its solid theoretical foundation, providing deterministic solutions and performance guarantees. In a hierarchical framework of this kind, one may use ML online learning to handle intra-slice optimization tackling issues such as user behavior prediction and resource demand estimation, while using mathematical optimization methods to handle resource allocation conflicts between slices (inter-slice optimization). This mathematical framework may include ADMM (Alternating Direction Method of Multipliers), for example, which can effectively decompose large-scale optimization problems into smaller sub-problems. Other suitable methods may include robust optimization, which can handle uncertainties; distributed optimization, suitable for large-scale networks; and multi-objective optimization, which can balance multiple performance indicators. This hybrid approach can combine the advantages of both methods, providing a more flexible, efficient, and reliable network slicing management solution.

However, it is not mandatory to use ML online learning for intra-slice optimization, but mathematical methods may be used instead. Correspondingly, it is not mandatory to use mathematical methods for inter-slice optimization, but ML online learning may be used instead.

Some example embodiments address the challenge of designing an adaptive online network slicing system for the O-RAN ecosystem. Among others, they solve the problem how to effectively coordinate multiple xApps and their associated policies across different network slices, given the dynamic nature of the network environment. The system faces three key technical challenges:
- First, slice policies need to be learned and adapted online, as they comprise various rules and optimization results that change over time.
- Second, network slices are unstable, frequently connecting and disconnecting, which complicates consistent management.
- Third, system-wide constraints, such as resource priorities and capacity limitations, are constantly changing.

Some example embodiments provide a coordinator that may minimize costs, improve resource utilization, and maintain system constraints while adapting to these dynamic conditions. This is particularly challenging as the number of slices, constraints, and policies are all variable, requiring a flexible and robust orchestration solution.

Some example embodiments provide an Adaptive Online Network Slicing (AONS) System for practical network slice management at scale. Unlike traditional network slicing orchestration frameworks that rely on static configurations, the AONS system employs online learning to dynamically perceive network states with multiple agents and a coordinator to adjust slice-specific actions. This approach enhances the adaptability and scalability of the system in time-varying network environments.

Specifically, some example embodiments deploy an Adaptive Online Orchestration Framework comprising several learning agents and a coordinator. These components achieve different optimization objectives; learning agents handle intra-slice constraints, such as the variable demands for network performance within a slice, while the coordinator addresses system-wide issues like the capacity constraints of wireless resources. Instead of managing all slices with a singular model, the per-slice agent interaction with the coordinator allows for a more precise allocation of network resources, thus improving resource utilization.

In some example embodiments, learning agents are used to manage intra-slice optimization challenges. These agents are primarily implemented in the Near-RT RIC's xApps. Various policy options may be available to these agents, including empirical rules, ML or Deep Learning (DL) optimizations, and mathematical-based optimizations. The agents take network states as inputs and periodically acquire network performance data to determine the optimal resource allocation strategy that meets the slice's constraints.

Furthermore, some example embodiments employ a coordinator to address inter-slice issues. The coordinator may be situated within the rApp and may utilize a distributed optimization framework, such as the ADMM method. Communication between the coordinator and the agents may occur via the O-RAN O1 interface, with iterative action updates facilitated by auxiliary variables that dictate the resource allocation for each slice.

Some aspects of some example embodiments may be summarized as follows:
- An end-to-end network slicing orchestration system that may adapt more effectively to network dynamics than existing methodologies.
- A distributed resource orchestration framework capable of adapting to time-varying networks.
- A method that optimally addresses both intra-slice constraints and inter-slice coordination.
- An Adaptive Online Network Slicing Orchestration System built for and fully compatible with the O-RAN framework, tailored for dynamic network environments.

The AONS system is not only applicable in the context of O-RAN but generally applicable to all cellular networks and does not preclude any specific deployment.

Hereinafter, the overall architecture of the Adaptive Online Network Slicing System followed by its operational workflow, key components, algorithms, and implementation aspects are described.

### Overall System Architecture

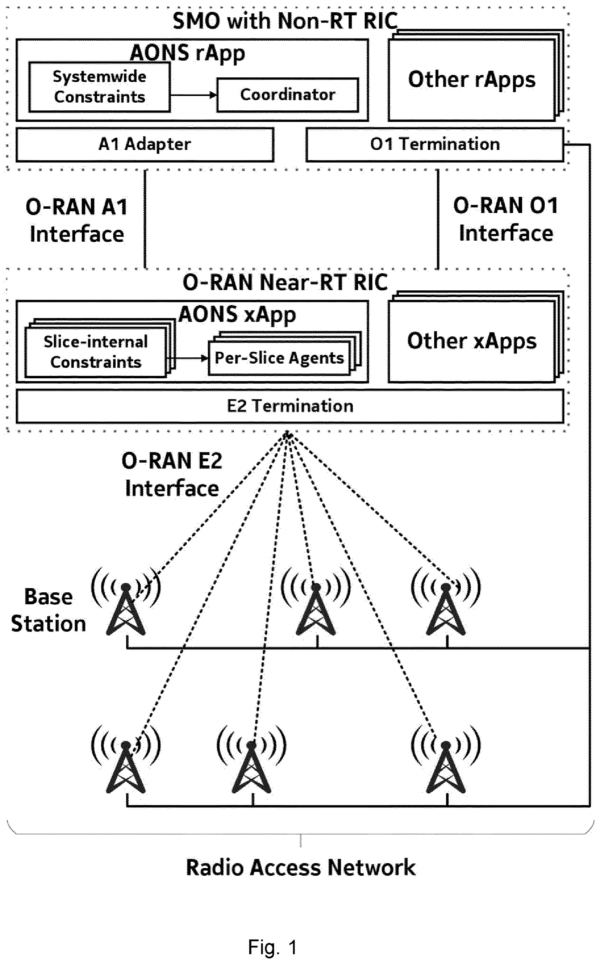

According to some example embodiments, the Adaptive Online Network Slicing System, as illustrated in Fig. 1, is composed of multiple modules: a coordinator typically deployed within an rApp (i.e., the AONS rApp) and learning agents typically deployed within an xApp (i.e., the AONS xApp). The AONS system deploys interfaces between the coordinator and the learning agents. Within each slice, one or more xApp-level learning agents are tasked with addressing slice-specific challenges, such as meeting performance metric requirements (e.g., latency, frames per second, throughput) for the respective slice. These agents implement diverse policies to resolve issues, leveraging techniques such as Al-based training, regression models, and mathematical frameworks. The rApp-level coordinator is responsible for managing system-wide constraints, including wireless resource capacity and mobile operator costs. It typically utilizes distributed algorithms, such as the Alternating Direction Method of Multipliers (ADMM), to facilitate interaction with agents. Notably, the agents function autonomously, refraining from direct information exchange or consideration of inter-agent constraints during problem-solving. The coordinator centrally processes the optimization outcomes from the agents, which may involve retraining and refinement of procedures.

### Operational Workflow

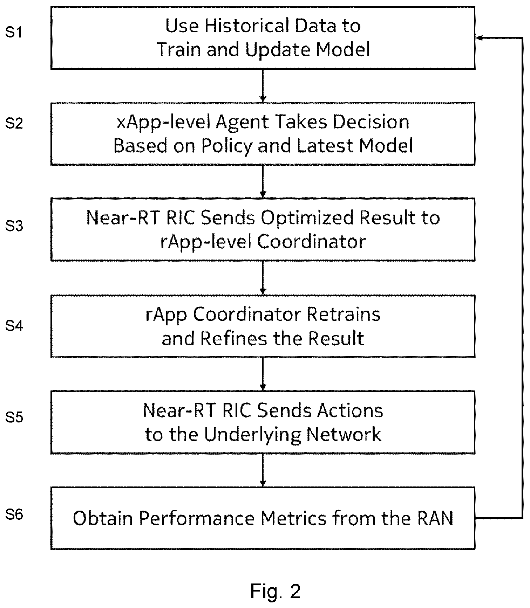

Fig. 2 illustrates the system's operational workflow according to some example embodiments, depicting the general network slicing orchestration and the optimization and cooperation between the AONS xApp agents and AONS rApp coordinators. As shown in Fig. 2, the process may be summarized as follows:
- S1: Learning agents use historical data, such as action-performance pairs, to train and update local models. These surrogate models serve the individual agents.
- S2: Agents make decisions based on the latest model and their policies, incorporating empirical rules, ML/DL optimizations, and mathematical solutions. The decisions comprise a set of actions, wherein an action may be to modify some parameter or not to modify (to maintain) some parameter. Each slice's policy is independent from the status and the policies of the other slices to provide an optimal action for the respective slice that meets its specific constraints.
- S3: The agents do not instruct the base station to perform the actions according to their derived decisions but relay their decision (set of actions) to the coordinator, e.g. via the O1 interface.
- S4: The coordinator, considering system-level constraints like wireless resource capacity, receives the decisions from the agents and uses one or more distributed algorithms to achieve an optimal solution for the system under the system-level constraints. The optimization may potentially comprise multiple iterations, such as ADMM.
- S5: The near-RT RIC then receives from the coordinator a set of actions for the slices and issues these actions to the network elements, e.g., DU, gNB, etc.
- S6: The near-RT RIC also monitors slice data, focusing on performance metrics such as delay, frames per second, and throughput.
- Based on the performance outcome of actions within the network, a set of real-time action-performance pairs is generated and looped back to the first step for updating the surrogate model.

Through the procedure above, the system may dynamically orchestrate network resources with a view to enhancing resource utilization while minimizing the operational costs of CSPs. The xApp-level agents' policies are continually learned and updated online, addressing slice-specific issues, while the rApp-coordinator orchestrates global solutions to system-wide problems.

### Key Components and Interactions

The AONS system comprises of two primary components- the AONS xApp and the AONS rApp which interact with each other in a hierarchical manner. An architecture of this kind facilitates efficient resource allocation, dynamic adaptation, and optimization in network slicing. Hereinafter, a detailed description of each component is provided, emphasizing their roles, functionalities, and interactions within the overall system.

### The AONS xApp:

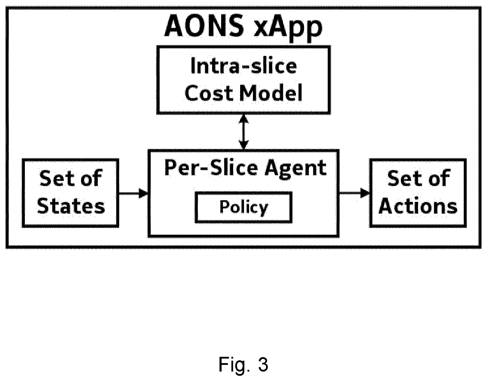

The xApp may incorporate a learning agent that performs online learning to address slice-specific issues. As illustrated in Fig. 3, the learning agent receives a set of states (input states), including the number of resources allocated to the slice, priority values, and other scheduling algorithm parameters. The agent then makes decisions based on its policy, which is derived from local data and learning models. The agent may also take into account an intra-slice cost model. The decisions comprise a set of actions which are reported to the coordinator (AONS rApp). The set of actions derived by the AONS xApp (learning agent) may be considered as a proposal for the coordinator. The xApp does not instruct the network element (base station) to perform the proposed set of actions.

Fig. 3 shows the following (logical) sub-components of the AONS xApp:
• **Set of states:** The set of states belongs to a state space for each xApp's policy. The state space encompasses slice-related information such as allocated resource quantities, priority values, resource quantities of other slices, and aggregate priority values of other slices.
• **Set of Actions:** The set of actions belongs to an action space. The action space for each xApp includes variables such as allocated resource quantities, priority values, weights, and scheduling algorithm parameters specific to the slice.
• **Cost Model:** From the Mobile Network Operator (MNO) perspective, the operating cost of running a slice is primarily dependent on resource usage. The cost model primarily focuses on the total resource consumption while considering slice-specific constraints, which may include time-varying requirements for certain metrics.
• **Policy:** The policy may include empirical rules, Machine Learning (ML) / Deep Learning (DL) optimization algorithms, or mathematical optimization techniques. The flexibility in policy design enables tailored solutions for diverse slice requirements.

### The AONS rApp:

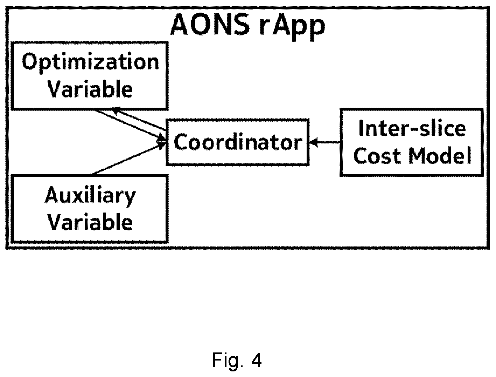

The coordinator (AONS rApp) is designed to iteratively resolve inter-slice, system-wide issues. As depicted in Fig. 4, the coordinator takes as input the results from the previous ((i-1)-th) iteration, namely the optimization variable and auxiliary variable. Since the coordinator aims to solve the inter-slice cost problem, the inter-slice cost model (=system-wide cost model) is also an input. At the same time, the coordinator considers global constraints and returns the next round (i-th) optimization results to the optimization variable. In other terms, the coordinator receives action sets from xApp agents and combines them with auxiliary variables, typically introduced by distributed optimization algorithms such as Alternating Direction Method of Multipliers (ADMM) or Lagrangian methods. As a result, the coordinator determines a set of actions. This set of actions is provided to the xApps for the slices, which instruct the respective network elements (e.g. gNB) to apply these actions.

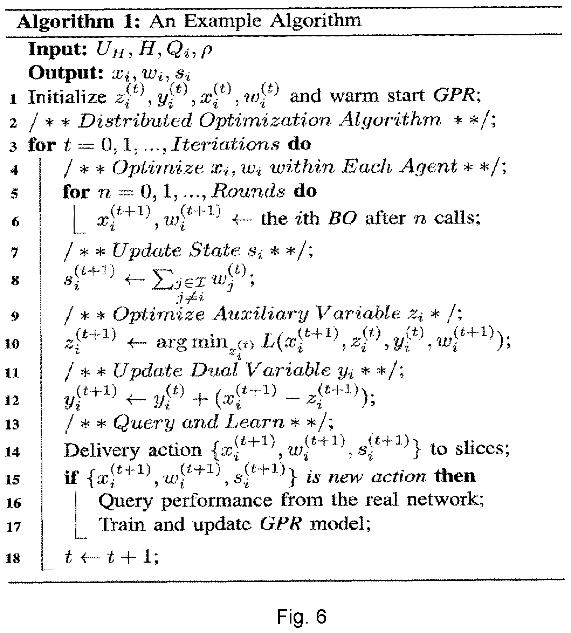

As shown in Fig. 4, the rApp may incorporate the following sub-components:
- **Optimization Variables:** The primary optimization variables are the action sets received from various slices. These actions represent the optimal decisions made by agents in solving their respective problems, which the coordinator may refine and retrain.
- **Auxiliary Variables:** The coordinator employs auxiliary variables to assist in refining and adjusting the optimization variables. These auxiliary variables, often derived from distributed optimization algorithms, facilitate the iterative updating of optimization variables. Auxiliary variables help break down complex optimization problems into simpler sub-problems that can typically converge to stable points or be solved in parallel. This approach reduces the complexity of solving the original problem and is suitable for large-scale optimization problems. For example, as shown in Fig. 6, line 10, the ADMM method introduces auxiliary variable zi, to help optimize the primary optimization variables.
- **Cost Model:** The coordinator's objective is to minimize the MNO's overall cost, which differs from the agent-level cost model. This system-wide cost model may consider wireless resource capacity constraints and the dynamic nature of slices (i.e., their connection and disconnection), which consequently affects the associated agents.

### Hierarchical xApp-rApp Operations and Interactions:

The AONS System provides a two-layer optimization approach. The xApp focuses on intra-slice optimization, while the rApp addresses inter-slice optimization. In detail:
- **Intra-slice Optimization:** xApp-level agents optimize slice-internal issues by considering inputs such as allocated resource quantities, priority values, without considering information about other slices. The output is a set of actions that satisfies given conditions. Various optimization strategies can be employed, including Al-based methods (e.g., DNN, DRL), experience-based rules, or mathematical models. This optimization problem is characterized by time-varying constraints and potential slice disconnections or reconnections, necessitating stable and adaptive optimization policies.

- **Inter-slice Optimization:** The rApp-level coordinator resolves inter-slice issues by refining the optimization results from agents. Since agents optimize independently based on local data and objectives, their resource allocations may be suboptimal from a system-wide perspective, potentially violating network capacity constraints. The coordinator refines these results using auxiliary variables to update the action sets, ensuring system-wide feasibility and optimality.
- **Constraints:** Some example embodiments may accommodate any type of constraints, ranging from explicit mathematical formulations-both linear and nonlinear-to more complex, implicitly defined constraints that do not conform to standard mathematical expressions. In cases of the latter, where constraints are unknown but query-able, fitting techniques may be used, such as Gaussian Processes (GP), to simulate these unknown constraints. These methods are adept at modeling and approximating unknown constraints. The fitted models are then incorporated into the optimization objective in the form of penalties.

In some example embodiments, the information exchange between the coordinator and agents may be facilitated through the O1 interface, in line with the O-RAN architecture.

This comprehensive design ensures that the AONS System can effectively manage resource allocation, adapt to dynamic network conditions, and optimize performance across multiple slices. The combination of local agent optimization and global coordination provides a robust and flexible solution. The solution may be suitable for next-generation network slicing challenges, too. The interfaces between the components may be standardized.

### Distributed Adaptive Online Learning Algorithm

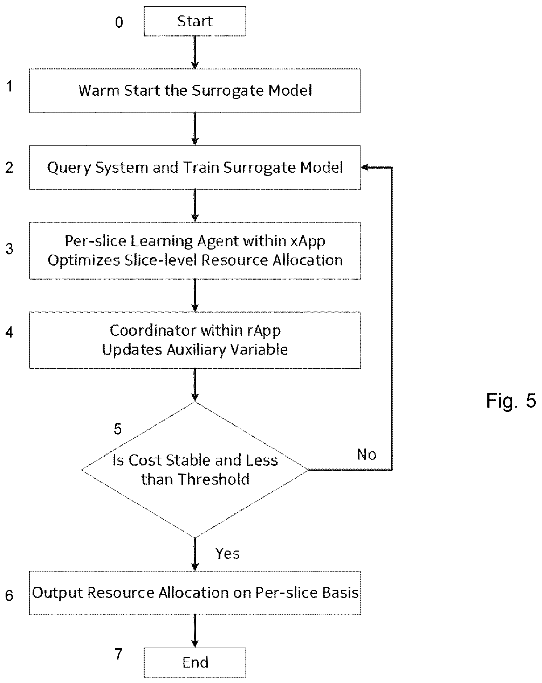

Additional technical details concerning the distributed adaptive online learning algorithm deployed across the AONS xApp and rApp according to some example embodiments are described. As shown in Fig. 5, the algorithm uses a distributed optimization approach that decomposes the problem into multiple sub-problems. For example, we use the ADMM technique to decouple the problem into a master problem and several slave problems. Within the context of this framework, each network slice's demand for wireless resources constitutes a slave problem, while the master problem focuses on optimizing auxiliary variables to coordinate the solutions of the slave problems.

Within this algorithm, each learning agent (at the AONS xApp) tackles its slice-specific optimization locally, finding optimal solutions within a defined scope. Concurrently, the coordinator (at the AONS rApp) ensures that these per-slice local optima can work in harmony across the system, achieving an overall optimal outcome. The optimization challenges are iteratively addressed, solving the slave and master problems until the CSP's costs converge to an effective solution. This method of decomposing and coordinating not only enhances the efficiency of problem-solving but also boosts the scalability and flexibility of the algorithm when dealing with large-scale network systems.

Once the problem is decoupled through the distributed optimization framework, existing optimization tools, such as the CVX toolbox of MATLAB, can be utilized to solve the master problem. For the slave problems, which may involve unknown, dynamic, and time-varying constraints, learning agents may employ a surrogate model to learn these network characteristics online-for example, using Gaussian Process Regression (GPR). By iteratively learning the relationship between wireless resource volumes and network characteristics, agents continuously improve the accuracy of their models. Consequently, each per-slice optimization challenge is treated as a black-box problem and tackled using black-box optimization methods, such as Bayesian optimization. This approach strives to minimize the costs for each slice under given constraints, thereby optimizing the overall system efficiency and cost-effectiveness.

The procedure shown in Fig. 5 is as follows:
- **0.** Start.
- **1.** Initially, warm start the surrogate model with a small amount of historical data, such as resource-performance pairs, to rapidly initiate the model for the first iteration of the distributed optimization algorithm. Here, one may use the ADMM (Alternating Direction Method of Multipliers) algorithm.
- **2.** The learning agent may query the system state and train the surrogate model accordingly.
- **3.** Subsequently, for each slice issue, a learning agent resolves its corresponding slave problem, which may involve expressions that are unknown or complex, potentially using deep neural networks or optimization algorithms such as DRL (Deep Reinforcement Learning), DNN (Deep Neural Networks), or Bayesian optimization.
- **4.** The coordinator addresses the master problem, fundamentally coordinating the solutions among different slices. Solutions may involve tools like the CVX toolbox, updating the auxiliary variables within the ADMM algorithm framework to orchestrate a global solution.
- **5.** Compute the CSP's cost; if the cost stabilizes and is less than the predetermined threshold, terminate the iterations. Otherwise, based on the latest solutions obtained from 4., query the corresponding system's performance and retrain and update the surrogate model for the next iteration.
- **6.** Repeat the above process (2.-5.) until the requirements are met and output the resources to be allocated to each slice.
- **7**. End.

Fig. 6 presents an example pseudocode for an algorithm accoding to some example embodiments. As depicted, the algorithm inputs include *Uₕ, H, Qᵢ*, and *p,* where *Uₕ* represents the price of wireless resources, *H* denotes the total amount of radio resources available to the CSP, *Qᵢ* represents the network performance requirements of users in the *i*th slice, and *p* is a positive constant related to the Lagrangian equation. The output *xᵢ* represents the amount of radio resources allocated to each slice, with *wᵢ* indicating the weights, and *sᵢ* representing the state of each slice. During the execution of the algorithm, additional variables such as *zᵢ* and *yᵢ* are introduced as auxiliary and dual variables respectively to decompose the original cost optimization problem by using the ADMM method. *L* denotes the Lagrangian function used to decouple problems.

For the surrogate model, the Gaussian Process Regression (GPR) is used, which is a sample-efficient, non-parametric Bayesian regression method based on Gaussian processes. For solving the per-slice slave problems, we utilize Bayesian Optimization (BO), a global optimization method suited for optimizing black-box functions, which is particularly appropriate given the high evaluation costs and the absence of analytical expressions in the constraints of the slave problems. For the master problem, the CVX toolbox is used, which is a toolbox specifically designed for convex optimization issues. It offers a domain-specific language (DSL) approach for describing and solving a variety of convex optimization problems, which is highly convenient for resolving the master problem.

### Implementation and Validation within the O-RAN Ecosystem

In order to validate the claimed performance benefits of the AONS System according to an example embodiment, the framework was deployed on an over-the-air experimental testbed. The testbed includes an O-RAN-compliant base station, a 5G core network, and the near-RT and non-RT RICs. Multiple network slices are deployed, each hosting users running various applications such as browsers, video streaming, and speed tests, creating a comprehensive end-to-end network environment.

Each slice incorporates a learning agent capable of running heterogeneous or identical policies, implemented as part of the AONS xApps. The policies include Bayesian optimization, DRL agents, and DNNs. Given the diversity of applications within the slices, each demands unique network performance characteristics. Nevertheless, the agents periodically receive near-RT network performance metrics, which serve as inputs to the xApps. These metrics then inform the policies, allowing for the dynamic adjustment of outputs to optimize actions.

The rApp coordinator refines the actions derived from each xApp, constrained by the total available radio resources. Specifically, the coordinator uses the ADMM technique, leveraging dual and auxiliary variables to update actions. These refined actions are then delivered to the agents via the O1 interface for the next round of optimization. The interaction between coordinators and agents is iterative, updating actions to meet agent-specific constraints while also aiming to minimize the CSP's costs.

Moreover, during system operation, unstable connections are simulated by disconnecting and reconnecting slices. This not only tests the system's capacity to handle disruptions but also its adaptability to dynamic conditions such as the addition of new slices. These scenarios are essential for assessing the robustness and scalability of the network slicing solution including the AONS system within a continuously evolving O-RAN environment.

The performance of the AONS System was compared against several state-of-the-art solutions-global Bayesian optimization (GBO), ATLAS, and exhaustive search (ExSearch). The results show that the AONS system achieves the least total cost, while achieving the highest normalized performance even under dynamic environments, wherein the number of slices as well as the number of users per slice is changing throughout the evaluation.

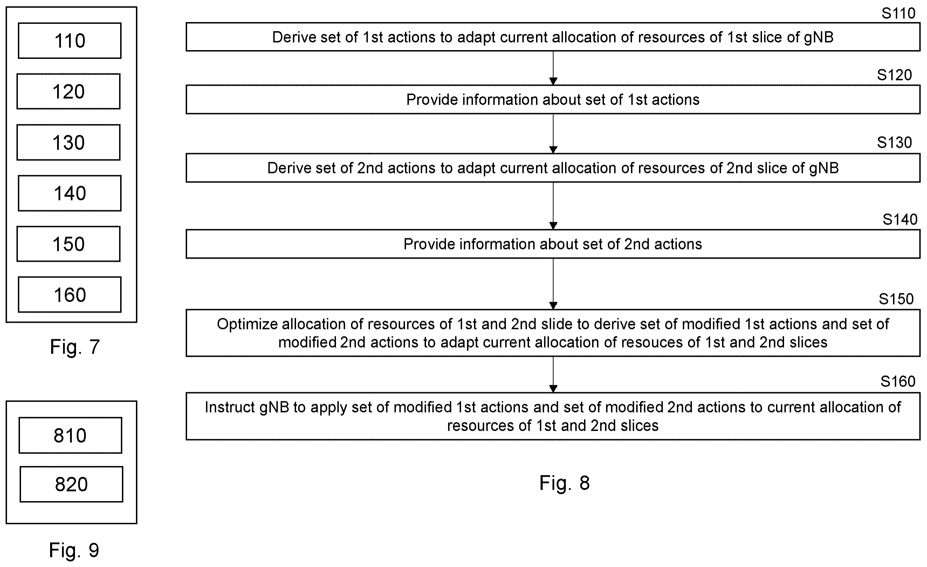

Fig. 7 shows an apparatus according to an example embodiment. The apparatus may be an optimizer (such as an AONS system) or an element thereof. Fig. 8 shows a method according to an example embodiment. The apparatus according to Fig. 7 may perform the method of Fig. 8 but is not limited to this method. The method of Fig. 8 may be performed by the apparatus of Fig. 7 but is not limited to being performed by this apparatus.

The apparatus comprises first means for deriving 110, first means for providing 120, second means for deriving 130, second means for providing 140, means for jointly optimizing 150, and means for instructing 160. The first means for deriving 110, first means for providing 120, second means for deriving 130, second means for providing 140, means for jointly optimizing 150, and means for instructing 160 may be a first deriving means, first providing means, second deriving means, second providing means, jointly optimizing means, and instructing means, respectively. The first means for deriving 110, first means for providing 120, second means for deriving 130, second means for providing 140, means for jointly optimizing 150, and means for instructing 160 may be a first deriver, first provider, second deriver, second provider, optimizer, and instructor, respectively. The first means for deriving 110, first means for providing 120, second means for deriving 130, second means for providing 140, means for jointly optimizing 150, and means for instructing 160 may be a first deriving processor, first providing processor, second deriving processor, second providing processor, jointly optimizing processor, and instructing processor, respectively.

The first means for deriving 110 derives a set of first actions (S110). The set of first actions is for adapting a current allocation of resources of a first slice of a base station to fulfill a first performance requirement on the first slice. The first means for deriving 110 derives the set of first actions independently from a current allocation of the resources of a second slice of the base station. The second slice is different from the first slice.

The first means for providing 120 provides information about the set of first actions (S120). For example, the first means for providing 120 may provide the information about the set of first actions to the means for jointly optimizing 150. The information about the set of first actions may indicate the first actions of the set of first actions.

The second means for deriving 130 derives a set of second actions (S130). The set of second actions is for adapting a current allocation of resources of the second slice of the base station to fulfill a second performance requirement on the second slice. The second means for deriving 130 derives the set of second actions independently from a current allocation of the resources of the first slice of the base station.

The second means for providing 140 provides information about the set of second actions (S140). For example, the second means for providing 140 may provide the information about the set of second actions to the means for jointly optimizing 150. The information about the set of second actions may indicate the second actions of the set of second actions.

The means for jointly optimizing 150 optimizes jointly the allocation of the resources of the first slice and the allocation of the resources of the second slice based on the information about the set of first actions, the current allocation of the resources of the first slice, the information about the set of second actions, and the current allocation of the resources of the second slice to derive a set of modified first actions to adapt the current allocation of the resources of the first slice and a set of modified second actions to adapt the current allocation of the resources of the second slice (S150).

The means for instructing 160 instructs the base station to apply the set of modified first actions to the current allocation of the resources of the first slice and to apply the set of modified second actions to the current allocation of the resources of the second slice (S160).

Fig. 9 shows an apparatus according to an example embodiment. The apparatus comprises at least one processor 810, at least one memory 820 storing instructions that, when executed by the at least one processor 810, cause the apparatus at least to perform the method according to Fig. 8 and related description.

"Optimizing" may not necessarily mean to find the absolute optimum. It may include to find a solution that is better than some threshold value, or to find a solution such that a threshold effort to find the solution is not exceeded.

Some example embodiments may be implemented for base stations based on slices. They may be implemented for base stations of 3GPP communication networks of any generation or non-3GPP communication networks.

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of corresponding entities may be different or the same as in the present description.

**If** not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. **It** does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, a slice management system or an element thereof or a resource allocation optimizer or an element thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

## Claims

1. Apparatus comprising
first means for deriving a set of first actions to adapt a current allocation of resources of a first slice of a base station to fulfill a first performance requirement on the first slice independently from a current allocation of the resources of a second slice of the base station different from the first slice;
first means for providing information about the set of first actions;
second means for deriving a set of second actions to adapt the current allocation of the resources of the second slice of the base station to fulfill a second performance requirement on the second slice independently from the current allocation of the resources of the first slice of the base station;
second means for providing information about the set of second actions;
means for jointly optimizing the allocation of the resources of the first slice and the allocation of the resources of the second slice based on the information about the set of first actions, the current allocation of the resources of the first slice, the information about the set of second actions, and the current allocation of the resources of the second slice to derive a set of modified first actions to adapt the current allocation of the resources of the first slice and a set of modified second actions to adapt the current allocation of the resources of the second slice;
means for instructing the base station to apply the set of modified first actions to the current allocation of the resources of the first slice and to apply the set of modified second actions to the current allocation of the resources of the second slice.

2. The apparatus according to claim 1, further comprising at least one of
first means for inhibiting the base station to apply the set of first actions to the current allocation of the resources of the first slice; or
second means for inhibiting the base station to apply the set of second actions to the current allocation of the resources of the second slice.

3. The apparatus according to any of claims 1 and 2, wherein at least one of
the means for deriving the set of first actions is configured to derive the set of first actions taking into account at least one of
• constraints of the first slice without taking into account the second slice, or
• slice specific costs of the allocation of the resources of the first slice; or
the means for deriving the set of second actions is configured to derive the set of second actions taking into account at least one of
• constraints of the second slice without taking into account the first slice, or
• slice specific costs of the allocation of the resources of the second slice; or
the means for jointly optimizing is configured to jointly optimize the allocation of the resources of the first slice and the allocation of the resources of the second slice taking into account at least one of a total capacity of the resources of the base station or total costs for an operator of the base station.

4. The apparatus according to any of claims 1 to 3, wherein the resources of the first slice and the resources of the second slice are radio resources of the base station.

5. The apparatus according to any of claims 1 to 4, wherein at least one of
the first means for deriving is a first learning agent; or
the second means for deriving is a second learning agent.

6. The apparatus according to any of claims 1 to 5, wherein the first means for deriving and the second means for deriving are configured to derive the set of first actions and the set of second actions as a slave of an Alternating Direction Method of Multipliers technique, and the means for jointly optimizing is configured to derive the set of modified first actions and the set of modified second actions as a master of the Alternating Direction Method of Multipliers technique.

7. Method comprising
deriving a set of first actions to adapt a current allocation of resources of a first slice of a base station to fulfill a first performance requirement on the first slice independently from a current allocation of the resources of a second slice of the base station different from the first slice;
providing information about the set of first actions;
deriving a set of second actions to adapt the current allocation of the resources of the second slice of the base station to fulfill a second performance requirement on the second slice independently from the current allocation of the resources of the first slice of the base station;
providing information about the set of second actions;
jointly optimizing the allocation of the resources of the first slice and the allocation of the resources of the second slice based on the information about the set of first actions, the current allocation of the resources of the first slice, the information about the set of second actions, and the current allocation of the resources of the second slice to derive a set of modified first actions to adapt the current allocation of the resources of the first slice and a set of modified second actions to adapt the current allocation of the resources of the second slice;
instructing the base station to apply the set of modified first actions to the current allocation of the resources of the first slice and to apply the set of modified second actions to the current allocation of the resources of the second slice.

8. The method according to claim 7, further comprising at least one of
inhibiting the base station to apply the set of first actions to the current allocation of the resources of the first slice; or
inhibiting the base station to apply the set of second actions to the current allocation of the resources of the second slice.

9. The method according to any of claims 7 and 8, wherein at least one of the set of first actions is derived taking into account at least one of
• constraints of the first slice without taking into account the second slice, or
• slice specific costs of the allocation of the resources of the first slice; or
the set of second actions is derived taking into account at least one of
• constraints of the second slice without taking into account the first slice, or
• slice specific costs of the allocation of the resources of the second slice; or
the allocation of the resources of the first slice and the allocation of the resources of the second slice is jointly optimized taking into account at least one of a total capacity of the resources of the base station or total costs for an operator of the base station.

10. The method according to any of claims 7 to 9, wherein the resources of the first slice and the resources of the second slice are radio resources of the base station.

11. The method according to any of claims 7 to 10, wherein at least one of
the set of first actions is derived by a first learning agent; or
the set of second actions is derived by a second learning agent.

12. The method according to any of claims 7 to **11,** wherein the set of first actions and the set of second actions are derived by a slave of an Alternating Direction Method of Multipliers technique, and the set of modified first actions and the set of modified second actions are derived by a master of the Alternating Direction Method of Multipliers technique.

13. A computer program product comprising a set of instructions which, when executed on an apparatus, is configured to cause the apparatus to carry out the method according to any of claims 7 to 12.

14. The computer program product according to claim 13, embodied as a computer-readable medium or directly loadable into a computer.
